# EUROPEAN PATENT SPECIFICATION

(11) **EP 3 974 933 B1**
(45) Date of publication and mention of the grant of the patent: **03.01.2024**
(21) Application number: 21198522.1
(22) Date of filing: 23.09.2021
(51) Int. Cl.: G05D 1/00

(54) **CONTROLLING A VEHICLE BASED ON DETECTED MOVEMENT OF AN OBJECT**
STEUERUNG EINES FAHRZEUGS AUF BASIS EINER ERFASSTEN BEWEGUNG EINES OBJEKTS
COMMANDE D'UN VÉHICULE SUR LA BASE DE MOUVEMENT DÉTECTÉ D'UN OBJET

(30) Priority: 23.09.2020 US 202063081991 P; 22.09.2021 US 202117481607
(43) Date of publication of application: 30.03.2022
(60) Divisional application: 23191513.3
(73) Proprietor: Aurora Flight Sciences Corporation, a subsidiary of The Boeing Company, Manassas VA 20110 (US)
(72) Inventor: CHUA, Zarrin, Chicago, 60606-1596 (US); KEARNEY-FISCHER, Martin, Chicago, 60606-1596 (US)
(74) Representative: Kilburn & Strode LLP

(56) References cited:
- US-A1- 2018 251 219

## Description

### FIELD

Embodiments described herein relate to enhancing operational efficiency of a vehicle, and more particularly to controlling, based on detected movement of an object, a vehicle, such as an unmanned aerial vehicle in a taxiing environment.

### BACKGROUND

As unmanned vehicles, such as unmanned aerial vehicles (UAVs) become more widespread, the need for reliable communication and control has increased. For example, many conventional UAVs are controlled during taxiing operations from a ground control station (GCS), which allows a remote pilot to transmit, via radio devices, taxiing and other commands to the UAV to control movement of the UAV. However, there may be instances where communication between the GCS and UAV may be diminished or unavailable. For example, obstacles such as satellite geometry or terrain and building layout may interfere with the communication link between the GCS and UAV, and bandwidth or signal interference issues may also degrade communication performance.

US2018251219A1 describes, in accordance with its abstract, systems, apparatuses, and methods for unmanned aerial vehicle (UAV) control. A system for UAV control is described as comprising a flight control system of a UAV, an image sensor on the UAV, an aircraft marshaling signal database, and a control circuit coupled to the flight control system, the image sensor, and the aircraft marshaling signal database. The control circuit being configured to: detect, with the image sensor, a gesture from a ground crew member, verify that the ground crew member is an authorized controller of the UAV, compare the gesture with marshaling signals in the aircraft marshaling signal database to determine a corresponding marshaling signal, determine a flight command based on the corresponding marshaling signal, and execute the flight command with the flight control system of the UAV.

### SUMMARY

In a first aspect of the invention to which this European patent relates, a method of enhancing operational efficiency of a vehicle in accordance with claim 1 is provided. In a second aspect of the invention to which this European patent relates, a computer-readable storage medium for enhancing operational efficiency of a vehicle in accordance with claim 12 is provided. In a third aspect of the invention to which this European patent relates, a system for enhancing operational efficiency of a vehicle in accordance with claim 14 is provided.

According to some examples, a method of enhancing operational efficiency of a vehicle includes detecting, by an optical sensor, a movement of at least one object in a field of view of the optical sensor. The method further includes identifying, by a processor circuit, a pattern based on the movement of the at least one object. The method further includes determining, by the processor circuit based on the pattern, a vehicle command to be performed by the vehicle.

According to some examples, the optical sensor includes a forward-facing optical sensor, and the field of view is directed towards a direction of the vehicle's motion.

According to some embodiments, the movement of the at least one object includes a gesture performed by a body part of a human.

According to some examples, the vehicle includes an aircraft, and the vehicle command includes a taxiing command that causes an aircraft to perform a taxiing operation.

According to some examples, the at least one object includes an equipment being held by a human.

According to some examples, the equipment includes an illuminated lighting element being held by the human.

According to some examples, determining the vehicle command further includes correlating the pattern with a relevant command of a stored command inventory.

According to some examples, the method further includes determining, by the processor circuit, whether the movement of the at least one object is associated with an authorization to provide the vehicle command.

According to some examples, the determining whether the movement of the at least one object is associated with the authorization further includes determining whether a human associated with the movement of the object is authorized to provide the vehicle command.

According to some examples, the determining whether the movement of the at least one object is associated with the authorization further includes identifying, by the processor circuit, a uniform element being worn by the human that is indicative of the authorization to provide the vehicle command, wherein determining whether the human is authorized is at least partially based on the uniform element.

According to some examples, the determining whether the movement of the at least one object is associated with the authorization further includes identifying, by the processor circuit, a fiducial being held by the human that is indicative of the authorization to provide the vehicle command, wherein determining whether the human is authorized is at least partially based on the fiducial.

According to some examples, the method further includes receiving, by a receiver, a signal from a transmitter associated with the at least one object, wherein determining whether the movement of the at least one object is associated with the authorization is at least partially based on the signal.

According to some examples, receiving the signal further includes receiving the signal that is associated with the vehicle command from a baton held by a human, and verifying, by the processor circuit, the vehicle command at least partially based on the signal.

According to another example, the method further includes causing, by the processor circuit, a component of the vehicle to execute the vehicle command.

According to some examples, the method further includes selectively illuminating a lighting element of the vehicle to provide a visual indication of at least one of a detection of the object, a detection of the movement, a determination of the vehicle command, or an execution of the vehicle command.

According to some examples, the method further includes selectively moving a movable element of the vehicle to provide a visual indication of at least one of the determination of the vehicle command or the execution of the vehicle command.

According to some examples, a computer-readable storage medium for enhancing operational efficiency of a vehicle includes executable instructions. In response to execution, the executable instructions cause a system that comprises a processor circuit to perform operations including receiving sensor data from at least one optical sensor of a vehicle. The operations further include, based on an analysis of the sensor data, determining a movement of an object in a field of view of the at least one optical sensor. The operations further include, based on the movement of the object, identifying a pattern. The operations further include, based on the pattern, determining a vehicle command to be performed by the vehicle. The computer-readable storage medium may be a non-transitory computer-readable storage medium.

According to some examples, the movement of the object comprises a gesture by a human, wherein determining the movement of the object further includes identifying the gesture. The operations further include determining whether the human is authorized to provide the vehicle command.

According to some examples, a system for enhancing operational efficiency of a vehicle includes a processor circuit and a memory comprising machine-readable instructions that, when executed by the processor circuit, cause the processor circuit to perform operations. The operations include identifying, by the processor circuit, at least one gesture performed by a human based on an arm movement of the human. The operations further include determining, by the processor circuit, a vehicle command to be performed by the vehicle based on the at least one gesture. The operations further include determining, by the processor circuit, whether the human is authorized to provide the vehicle command. The operations further include, in response to determining that the human is authorized, executing the vehicle command.

According to some examples, the system further includes a vehicle including the processor circuit and the memory, the vehicle further including: a forward-facing optical sensor configured to detect the arm movement of the human in a field of view of the optical sensor, wherein the human is external to the vehicle.

### BRIEF DESCRIPTION OF THE DRAWINGS

FIG. 1 is an example diagram of components of a vehicle (e.g., a UAV) that detects and interprets arm gestures by a human to control the UAV, according to some embodiments.
FIG. 2 is an example diagram illustrating various software modules for executing operations by the vehicle of FIG. 1, according to some embodiments.
FIG. 3A is an example flowchart diagram of operations for detecting movements of an object and determining vehicle commands based on the movements, according to some embodiments.
FIG. 3B is an example flowchart diagram of additional operations for determining whether a human associated with the movements is authorized to provide vehicle commands, according to some embodiments.
FIG. 3C is an example flowchart diagram of additional operations for operating the vehicle based on determined vehicle commands, according to some embodiments.
FIG. 4 is an example diagram illustrating detecting, by the vehicle, different arm gestures associated with different vehicle commands, according to some embodiments.

### DETAILED DESCRIPTION

The following detailed description of examples refers to the accompanying drawings, which illustrate specific examples of the disclosure. Other examples having different structures and operations do not depart from the scope of the subject disclosure. Like reference numerals may refer to the same element or component in the different drawings.

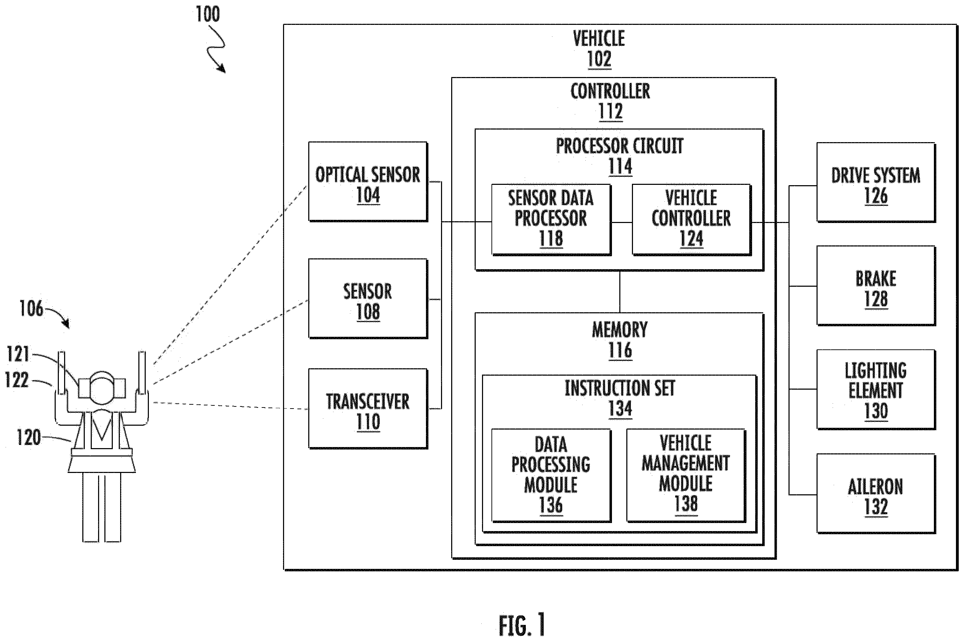

FIG. 1 is an example diagram of components of a system 100 for a vehicle 102 that detects and interprets arm gestures by a human to facilitate control of the vehicle 102, according to some embodiments. As an example, the vehicle 102 can comprise manned or unmanned vehicles, including, but not limited to unmanned aerial vehicles (UAVs). The system 100 in this example includes a vehicle 102 having a forward-facing optical sensor 104, e.g., an electro-optical camera, or another type of sensor configured to detect a movement of an object, such as an arm movement of a human 106 or movement of equipment held or worn by the human 106 for example, in a field of view of the optical sensor 104. It should also be understood that one or more optical sensors 104 or other types of sensors can be mounted in other locations on the vehicle 102 to detect other humans (e.g., wingwalkers, maintenance crew, etc.) at different locations with respect to the vehicle 102. In this example, the human 106 is a ground crew member, such as an Air Marshal, authorized to provide vehicle commands, that is external to the vehicle 102 during taxiing or other operation of the vehicle 102. In this example, the vehicle 102 can include additional devices for perceiving and/or communicating with external objects or devices, such as additional sensors 108, transceivers 110, and/or other components.

The vehicle 102 in this example includes a controller 112 having a processor circuit 114 and a memory 116 coupled to the processor circuit 114. The processor circuit 114 includes a sensor data processor 118 and a vehicle controller 124 in this example. The sensor data processor 118 receives a signal from the optical sensor 104 and identifies a gesture performed by the human 106 based on an arm movement of the human 106. The vehicle controller 124, also referred to as a mission management system, determines a vehicle command to be performed by the vehicle 102 based on the gesture and executes the vehicle command. As an example, information indicative of a vehicle command or a sequence of vehicle commands corresponding to a gesture can be stored in a data store (e.g., in memory 116 onboard vehicle 102 or a remotely coupled memory). Examples of vehicle commands include operating a drive system 126 of the vehicle 102 to move and/or steer the vehicle 102 during taxiing operations, operating a brake system 128 of the vehicle 102 to slow or stop the vehicle 102.

The sensor data processor 118 in some examples can also determine whether the human 106 is authorized to provide the vehicle command, such as by detecting an equipment being held by the human 106, such as, but not limited to, a uniform element 120 (e.g., safety vest, a pattern/logo/badge on the vest, etc.) or wearable gear, for example, ear protection 121 being worn on the body of the human 106 or a baton 122 being held by a hand of the human 106. Because many of these visual elements are specific to the aerospace industry, e.g., in the airport, helipad, or vertiport setting, the system 100 can quickly and accurately determine whether a human is authorized. Additionally, or alternatively, a defined security code or other signal can be transmitted from batons or other equipment that are equipped and/or retrofitted with additional hardware, as described in greater detail below.

The vehicle controller 124 in some examples can also provide a visual indication of detecting the human, determining the vehicle command, and/or executing the vehicle command. Examples of providing a visual indication include selectively illuminating a lighting element 130 or selectively moving a movable element, such as a control surface 132 (e.g., aileron). Such visual indication is visible to the human 106 providing the command, as a way of confirming to the human 106 that the command has been detected, recognized and/or executed. In some examples, the system 100 stores an indication that the human 106 is authorized, and accepts subsequent recognized commands from that human 106 without the need to repeat the initial authorization. In some examples, the system can provide a visual or other indication of other determinations, such as that a command has not been recognized, that the human 106 has not been identified, that the human 106 is not authorized, etc.

The memory 116 in this example is a computer-readable storage medium that includes an instruction set 134 having executable instructions that, when executed, cause the system 100 to perform various operations. The instruction set 134 in this example includes a data processing module 136 and a vehicle management module 138. The computer-readable storage medium may be a non-transitory computer-readable storage medium.

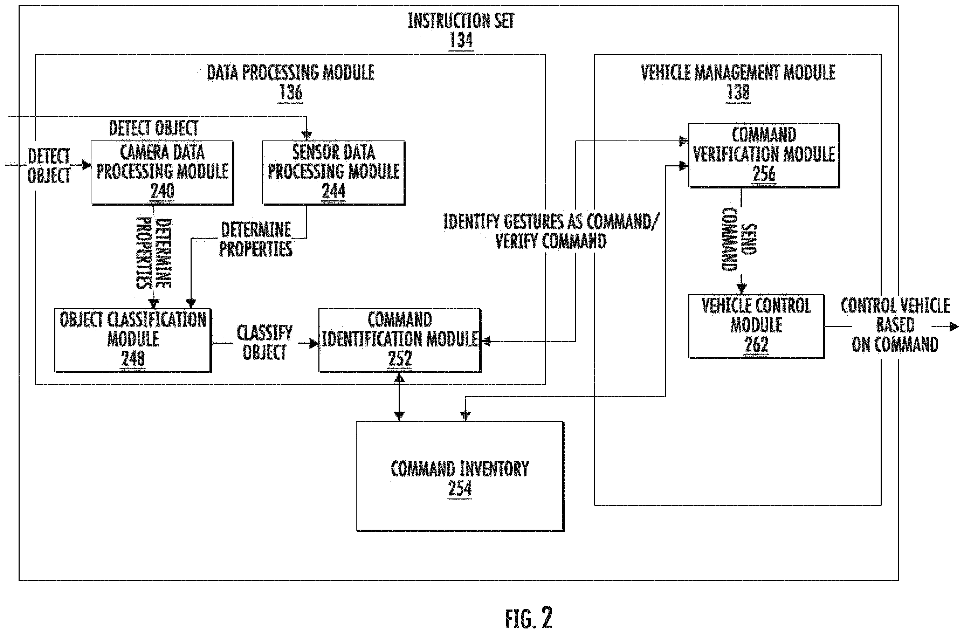

Referring now to Figure 2, an example diagram illustrates various software modules of the instruction set 134 for executing operations by the vehicle 102 of FIG. 1, according to some embodiments. In this example, the data processing module includes a camera data processing module 240 that causes the processor circuit 114 to determine properties of objects and/or movements detected by the optical sensor 104. The data processing module 136 also includes a sensor data processing module 244 that causes the processor circuit to determine properties of objects and/or movements detected by other sensors 108. An object classification module 248 causes the processor circuit 114 to classify the objects and/or movements based on their determined properties, and a command identification module 252 identifies the gestures as specific commands. In this example, the command identification module 252 accesses a command inventory 254 stored in the memory to determine the appropriate command and provides the command to the vehicle management module 138.

In this example, a command verification module 256 of the vehicle management module 138 receives an indication of the command from the command identification module 252 and verifies the command, for example by determining whether the command is being provided by an authorized person, and upon verification sends the command to a vehicle control module 262, which causes the processor circuit 114 to perform an operation or a sequence of operations, such as, operations that control the vehicle 102 based on the command.

Embodiments herein provide unique technical solutions to a number of technical problems. For example, conventional UAVs must interact with humans using a dedicated GCS in order to receive commands, and are not capable of accepting commands or otherwise directly communicating with other humans in their environment, such as air traffic controllers, ground handlers, maintenance personnel, or other humans outside of a dedicated GCS. In addition, GCS performance may be degraded or unavailable based on ground conditions, such as satellite geometry or terrain and building layout, high utilization of limited bandwidth, inability to provide live external-facing video feeds over existing channels, or other limitations (e.g., precision of control), which may result in reduced situational awareness for a GCS operator. By allowing UAVs 102 to recognize and directly interact with humans separately from the GCS, many of these drawbacks are mitigated or eliminated. In some examples, system 100 can be employed to command the UAV when access to the UAV's GCS is not available. Embodiments also employ some hardware that is already widely used in UAVs to provide low Size, Weight and Power (SWaP) and costs. Some embodiments leverage onboard hardware, such as optical sensors 104 (e.g., electro-optical cameras) and computing components, as well as additional sensors 108 such as infrared (IR) cameras, Light Detection and Ranging (LIDAR) sensors, or other sensors. For example, many existing UAVs already include front-facing electro-optical cameras having a field of view of approximately 60 degrees. In addition, system 100 reduces or avoids the need to use a towing vehicle to move the UAV around on the ground.

In some examples, existing Air Marshal batons 122 are retrofitted with sensor hardware, e.g., a processor, an accelerometer, that is capable of detecting the movement of the baton(s) and transmitting a signal, e.g., via a Radio-Frequency (RF) transceiver, to the transceiver 110 in the vehicle 102 that is indicative of the movement. In some examples, the batons 122 are further configured to determine a gesture and/or command associated with the movement and transmit a signal to the vehicle 102 that is indicative of the command. In some examples, these features are used to verify the determination by the vehicle 102 of the relevant command, such as to provide an additional layer of security and/or reliability. In other examples, these features are capable of controlling the vehicle 102 directly, with or without a separate determination of the gesture and/or command by the vehicle 102. In some examples, the signal includes an RF code that is received by neighboring batons 122, e.g., mated batons within an arm span of each other, to calculate relative position when determining the movement and/or command.

In this example, the optical sensors 104 and/or other sensors 108 sample the environment at different frequencies. Data processing is used to improve a signal-to-noise ratio in order to detect objects in the camera's and/or sensors' field of view and range. The output includes an indication that an object is present, its relative location, its size, and other attributes, such as color, etc.

In some examples, the object classification module 248 can use algorithms such as Region-based Convolutional Neural Networks, Semantic/Instance Segmentation, Skeletal Tracking, Body Pose Estimation, etc. to determine object classifications, such as air vehicles, land vehicles, humans, obstacles, etc. based on size, color, and other factors. In some examples, the algorithm is pretrained to identify an Air Marshal 106 based on held equipment, which are distinctive and readily identifiable, such as worn orange or lime safety vests or other uniform elements 120, ear protection 121, orange batons 122, etc. The distinctiveness of these elements also improves the identification of predefined arm orientations and movements. Other software modules, such as the command identification module 252 and/or the command verification module 254, etc. can use algorithms to correlate objects, orientations, movements, etc. with appropriate identifications, authorizations, commands etc., for example by accessing the command inventory 254, applying context-based rules, using artificial intelligence, or using other algorithms to make appropriate determinations for facilitating control of the vehicle 102.

It should also be understood that these and other features can be applied to other vehicle systems, such as autonomous cars, autonomous underwater vehicles, etc. For example, autonomous cars have similar problems with interacting with humans that do not have direct access to their controls. For example, an autonomous car in some examples is configured to receive commands from police manually directing traffic, rental car agents, parking attendants, and other persons that can provide gesture-based commands to direct operation of the autonomous car.

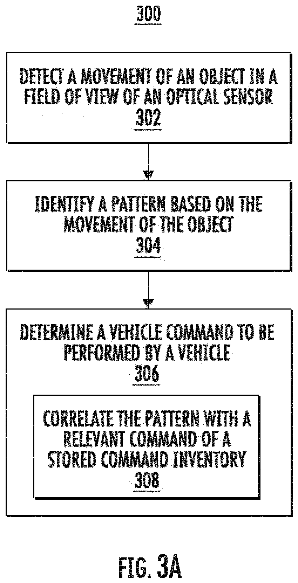

FIG. 3A is a flowchart diagram of operations 300 for detecting movements of an object and determining vehicle commands based on the movements, according to some embodiments. In this example, the operations 300 includes detecting a movement of an object in a field of view of an optical sensor (Block 302), such as by detecting an arm or other body part movement of a human that is external to a vehicle (e.g., by a forward-facing camera of a UAV), or by detecting a movement of an object (e.g., an illuminated lighting object) being held by a human, for example. Detecting the movement of the object may include detecting the object in the field of view and/or identifying the object as an object of interest (e.g., a human or a baton) within proximity of the aircraft before, during, or after detecting the movement itself. The operations 300 further include identifying a pattern based on the movement of the object (Block 304), such as by identifying a gesture of the human based on the arm movement, or identifying a motion pattern of a baton, for example. The operations 300 further include determining a vehicle command to be performed by the vehicle based on the pattern (Block 306). The determining in this example includes correlating the pattern with a relevant command of a stored command inventory (Block 308).

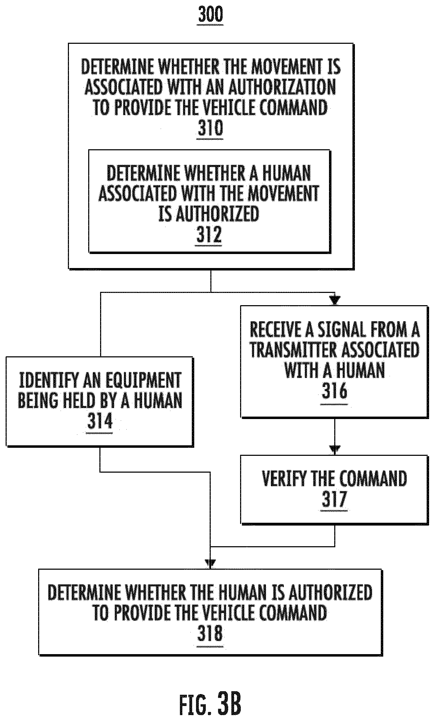

FIG. 3B is an example flowchart diagram of additional operations 300 for determining whether a human associated with the movements is authorized to provide vehicle commands, according to some embodiments. In this example, the operations 300 include determining whether the movement is associated with an authorization to provide the vehicle command (Block 310). In this example, the determining includes determining whether a human associated with the movement of the object is authorized to provide the specific vehicle command (Block 312). Determining whether the human is authorized to provide one or more vehicle commands can be performed before or after detecting the movement of the object (Block 302), identifying the pattern (Block 304), and/or determining the specific command (Block 306) of FIG. 3A, as desired.

The operations 300 of FIG. 3B further include identifying an equipment being held by a human (Block 314), such as identifying a fiducial being held by a hand of the human or identifying a uniform element or ear protection being worn by the human, or example. In this example, the operations 300 further include receiving a signal from a transmitter associated with a human (Block 316), such as from a baton held by a human, and verifying the vehicle command based at least in part on the signal (Block 317). Based on identifying the object and receiving the signal from the transmitter, the operations 300 further include determining whether the human is authorized to provide the command (Block 318).

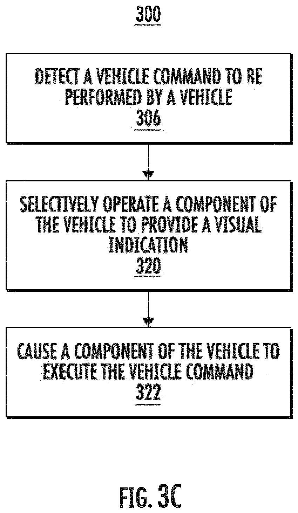

FIG. 3C is a flowchart diagram of additional operations 300 for operating the vehicle based on determined vehicle commands, according to some embodiments. In this example, the operations further include selectively operating a component of the vehicle to provide a visual indication of the determination of the vehicle command or the execution of the vehicle command (Block 320), such as by illuminating a lighting element or by selectively moving a movable element of the vehicle such as an aileron to provide the visual indication. It should be understood that other types of indications, such as audio, haptic, or other indications that can be detected by an observer or system monitoring the vehicle may also be provided, as desired. The operations further include causing a component of the vehicle to execute the vehicle command (Block 322), such as operating a drive system, operating a braking system, etc., as discussed above.

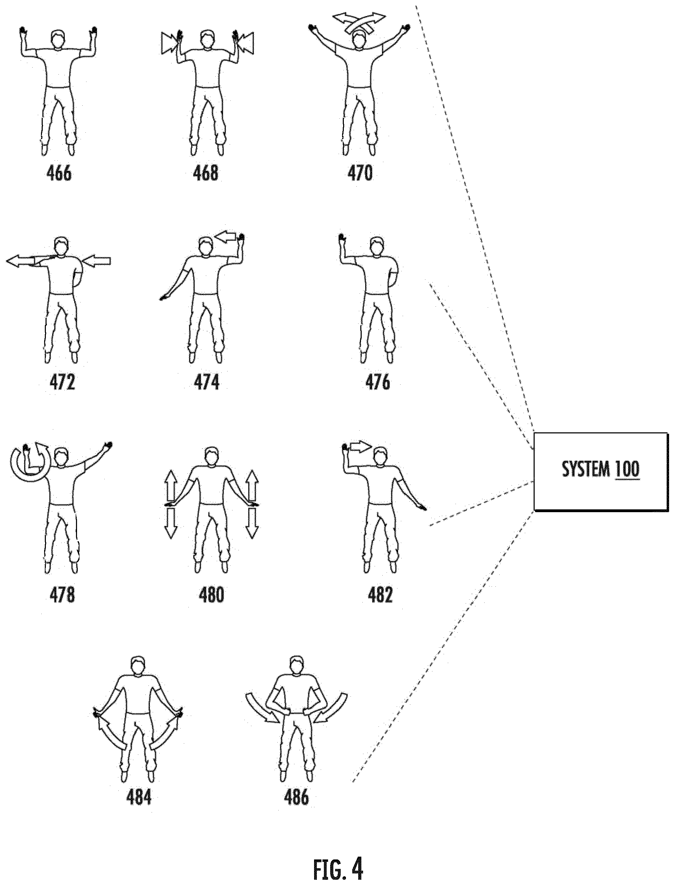

FIG. 4 is a diagram illustrating detecting, by the vehicle 102, different arm gestures associated with different vehicle commands, according to some embodiments. In this example, the gestures and command correspond to a standard lexicon of Air Marshal arm signals, which are detailed in Federal Aviation Administration's Airplane Flying Handbook ("www.faa.gov/regulations_policies/handbooks_manuals/aviation/airplane_handbook/media/ 04_afh_ch2.pdf"), but it should be understood that different gestures and commands can also be used. For example, gestures and/or commands can be specific for an airline or an airport and can be codified in the UAV's mission planning.

Table 1 below includes commands illustrated in FIG. 4:

**Table 1:**

| | Gesture | Command |
|---|---|---|
| 466 | Arms Raised | Stop |
| 468 | Arms Raised, hands moving forward and back | Come Ahead |
| 470 | Arms moving overhead, side to side | Emergency Stop |
| 472 | Right arm moving left to right | Cut Engines |
| 474 | Right arm raised | All Clear/O.K. |
| 476 | Right arm lowered, left hand raised moving left to right | Left Turn |
| 478 | Left arm raised, right arm raised moving in circle | Start Engine |
| 480 | Arms lowered, moving up and down | Slow Down |
| 482 | Left arm lowered, right hand raised moving left to right | Right Turn |
| 484 | Arms lowered, hands moving upward and out | Pull Chocks |
| 486 | Arms lowered, hands moving downward and in | Insert Chocks |

It should also be understood that different vehicles can be used to execute different commands. For example, some UAVs do not have the capability to insert or remove chocks from the UAV's landing gear. In some examples, a maintenance vehicle or robot includes a system having the same or similar components as system 100, and is configured to execute commands associated with taxiing or other operations, such as pulling or removing chocks for example.

As will be appreciated by one skilled in the art, aspects of the subject disclosure can be illustrated and described herein in any of a number of patentable classes or context including any new and useful process, machine, manufacture, or composition of matter, or any new and useful improvement thereof. Accordingly, aspects of the subject disclosure can may be implemented entirely hardware, entirely software (including firmware, resident software, micro- code, etc.) or combining software and hardware implementation that can all generally be referred to herein as a "circuit," "module," "component," or "system." Furthermore, aspects of the subject disclosure can take the form of a computer program product embodied in one or more computer readable media having computer readable program code embodied thereon.

Any combination of one or more computer readable media may be utilized. The computer readable media can be a computer readable signal medium or a computer readable storage medium. A computer readable storage medium can be, for example, but not limited to, an electronic, magnetic, optical, electromagnetic, or semiconductor system, apparatus, or device, or any suitable combination of the foregoing. More specific examples (a non-exhaustive list) of the computer readable storage medium would include the following: a portable computer diskette, a hard disk, a random access memory (RAM), a read-only memory (ROM), an erasable programmable read-only memory (e.g., erasable programmable read-only memory (EPROM) or Flash memory), an appropriate optical fiber with a repeater, a portable compact disc read-only memory (CD-ROM), an optical storage device, a magnetic storage device, or any suitable combination of the foregoing. In the context of this document, a computer readable storage medium can be any tangible medium that can contain or store a program for use by or in connection with an instruction execution system, apparatus, or device.

A computer readable signal medium can include a propagated data signal with computer readable program code embodied therein, for example, in baseband or as part of a carrier wave. Such a propagated signal can take any of a variety of forms, including, but not limited to, electro-magnetic, optical, or any suitable combination thereof. A computer readable signal medium can be any computer readable medium that is not a computer readable storage medium and that can communicate, propagate, or transport a program for use by or in connection with an instruction execution system, apparatus, or device. Program code embodied on a computer readable signal medium can be transmitted using any appropriate medium, including but not limited to wireless, wireline, optical fiber cable, RF, etc., or any suitable combination of the foregoing.

Computer program code for carrying out operations for aspects of the subject disclosure can be written in any combination of one or more programming languages, including an object oriented programming language such as Java, Scala, Smalltalk, Eiffel, JADE, Emerald, C++, C#, VB.NET, Python or the like, conventional procedural programming languages, such as the "C" programming language, Visual Basic, Fortran 2003, Perl, COBOL 2002, PHP Hypertext Preprocessor (PHP), Advanced Business Application Programming (ABAP), dynamic programming languages such as Python, Ruby and Groovy, or other programming languages. The program code can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS).

Aspects of the subject disclosure are described herein with reference to flowchart illustrations or block diagrams of methods, apparatuses (systems) and computer program products according to embodiments of the disclosure. It will be understood that each block of the flowchart illustrations or block diagrams, and combinations of blocks in the flowchart illustrations or block diagrams, can be implemented by machine-readable instructions, e.g., computer program instructions. These machine-readable instructions can be provided to a processor of a general-purpose computer, special purpose computer, or other programmable data processing apparatus to produce a machine, such that the instructions, which execute via the processor of the computer or other programmable instruction execution apparatus, create a mechanism for implementing the functions or acts specified in the flowchart or block diagram block or blocks.

These machine-readable instructions can also be stored in a transitory or non-transitory computer readable medium that when executed can direct a computer, other programmable data processing apparatus, or other devices to function in a particular manner, such that the instructions when stored in the computer readable medium produce an article of manufacture including instructions which when executed, cause a computer to implement the function or act specified in the flowchart or block diagram block or blocks. The machine-readable instructions can also be loaded onto a computer, other programmable instruction execution apparatus, or other devices to cause a series of operational steps to be performed on the computer, other programmable apparatuses or other devices to produce a computer implemented process such that the instructions which execute on the computer or other programmable apparatus provide processes for implementing the functions or acts specified in the flowchart or block diagram block or blocks. The flowchart and block diagrams in the figures illustrate the architecture, functionality, and operation of possible implementations of systems, methods, and computer program products according to various aspects of the subject disclosure. In this regard, each block in the flowchart or block diagrams can represent a module, segment, or portion of code, which includes one or more executable instructions for implementing the specified logical function(s). It should also be noted that, in some alternative implementations, the functions noted in the block may occur out of the order noted in the figures. For example, two blocks shown in succession can, in fact, be executed substantially concurrently, or the blocks can sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts, or combinations of special purpose hardware and computer instructions.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "includes," "including," "contains," "containing," "comprises" and "comprising," and the like, when used in this specification, specify the presence of stated features, steps, operations, elements, or components, but do not preclude the presence or addition of one or more other features, steps, operations, elements, components, or groups thereof. As used herein, the term "and/or" includes any and all combinations of one or more of the associated listed items and can be designated as "/". Like reference numbers signify like elements throughout the description of the figures.

## Claims

1. A method (300) of enhancing operational efficiency of a vehicle (102), the method comprising:
detecting (302), by an optical sensor (104), a movement of at least one object (106) in a field of view of the optical sensor;
identifying (304), by a processor circuit (114), a pattern based on the movement of the at least one object;
determining (306), by the processor circuit based on the pattern, a vehicle command to be performed by the vehicle,
receiving (316), by a receiver or transceiver (110), a signal from a transmitter associated with the at least one object, wherein the signal is associated with the vehicle command, wherein the signal is received from a baton (122) held by a human (106); and
verifying (317), by the processor circuit (114), the vehicle command at least partially based on the signal.

2. The method of claim 1, wherein the optical sensor comprises a forward-facing optical sensor (104), and wherein the field of view is directed towards a direction of the vehicle's motion.

3. The method of claim 1 or 2, wherein the movement of the at least one object comprises a gesture performed by a body part of a human (106).

4. The method of any of claims 1-3, wherein the vehicle comprises an aircraft, and wherein the vehicle command comprises a taxiing command that causes the aircraft to perform a taxiing operation.

5. The method of any of claims 1-4, wherein the at least one object comprises an equipment (120, 121, 122) being held by a human (106), and optionally wherein the equipment comprises an illuminated lighting element (122) being held by the human (106).

6. The method of any of claims 1-5, wherein determining the vehicle command further comprises correlating (308) the pattern with a relevant command of a stored command inventory (254).

7. The method of any of claims 1-6, further comprising determining (310), by the processor circuit, whether the movement of the at least one object is associated with an authorization to provide the vehicle command.

8. The method of claim 7, wherein the determining whether the movement of the at least one object is associated with the authorization further comprises determining (312) whether a human associated with the movement of the object is authorized to provide the vehicle command, and optionally wherein the method further comprises:
identifying (314), by the processor circuit, a uniform element (120) being worn by the human that is indicative of the authorization to provide the vehicle command, wherein determining whether the human is authorized is at least partially based on the uniform element; and/or
identifying (314), by the processor circuit, a fiducial (122) being held by the human that is indicative of the authorization to provide the vehicle command, wherein determining whether the human is authorized is at least partially based on the fiducial.

9. The method of claim 7 or 8, wherein determining whether the movement of the at least one object is associated with the authorization is at least partially based on the signal received from the transmitter associated with the at least one object.

10. The method of any of claims 1-9, further comprising causing (322), by the processor circuit, a component (130, 132) of the vehicle to execute the vehicle command.

11. The method of any preceding claim, further comprising:
selectively illuminating a lighting element (130) of the vehicle to provide a visual indication of at least one of a detection of the object, a detection of the movement, a determination of the vehicle command, or an execution of the vehicle command; and/or
selectively moving a movable element (132) of the vehicle to provide a visual indication of at least one of a detection of the object, a detection of the movement, a determination of the vehicle command or an execution of the vehicle command.

12. A computer-readable storage medium (116) for enhancing operational efficiency of a vehicle comprising executable instructions (134) that, in response to execution, cause a system (100) that comprises a processor circuit to perform operations comprising:
receiving sensor data from at least one optical sensor (104) of a vehicle (102);
based on an analysis of the sensor data, determining (302) a movement of an object (106) in a field of view of the at least one optical sensor;
based on the movement of the object, identifying (304) a pattern;
based on the pattern, determining (306) a vehicle command to be performed by the vehicle;
receiving (316), via a receiver or transceiver (110), a signal from a transmitter associated with the object, wherein the signal is associated with the vehicle command, wherein the signal is received from a baton (122) held by a human (106); and
verifying (317) the vehicle command at least partially based on the signal.

13. The computer-readable storage medium of claim 12, wherein the movement of the object comprises a gesture by a human (106), wherein determining the movement of the object further comprises identifying the gesture, and wherein the operations further comprise determining (318) whether the human is authorized to provide the vehicle command.

14. A system (100) for enhancing operational efficiency of a vehicle (102) comprising:
a processor circuit (114); and
a memory (116) comprising machine-readable instructions (134) that, when executed by the processor circuit, cause the processor circuit to perform operations (300) comprising:
identifying (304), by the processor circuit, at least one gesture performed by a human (106) based on movement of an object;
determining (306), by the processor circuit, a vehicle command to be performed by the vehicle based on the at least one gesture;
receiving (316), by the processor circuit (114) via a receiver or transceiver (110), a signal from a transmitter associated with the object, wherein the signal is associated with the vehicle command, wherein the signal is received from a baton (122) held by a human (106);
verifying (317) the vehicle command at least partially based on the signal;
determining (318), by the processor circuit, whether the human is authorized to provide the vehicle command; and
in response to determining that the human is authorized, executing (322) the vehicle command.

15. The system of claim 14, further comprising:
a vehicle (102) comprising the processor circuit and the memory, the vehicle further comprising:
a forward-facing optical sensor (104) configured to detect the arm movement of the human in a field of view of the forward-facing optical sensor, wherein the human is external to the vehicle.

## Patentansprüche

1. Verfahren (300) zur Verbesserung der Betriebseffizienz eines Fahrzeugs (102), wobei das Verfahren umfasst:
Erfassen (302), durch einen optischen Sensor (104), einer Bewegung von mindestens einem Objekt (106) in einem Sichtfeld des optischen Sensors;
Identifizieren (304) eines Musters, das auf der Bewegung des mindestens einen Objekts basiert, durch eine Prozessorschaltung (114);
Bestimmen (306) eines Fahrzeugbefehls durch die Prozessorschaltung basierend auf dem Muster, der durch das Fahrzeug auszuführen ist,
Empfangen (316) eines Signals von einem Sender, der mit dem mindestens einen Objekt verknüpft ist, durch einen Empfänger oder Transceiver (110), wobei das Signal mit dem Fahrzeugbefehl verknüpft ist, wobei das Signal von einem Stab (122) empfangen wird, der von einem Menschen (106) gehalten wird; und
Verifizieren(317) des Fahrzeugbefehls durch die Prozessorschaltung (114), zumindest teilweise basierend auf dem Signal.

2. Verfahren nach Anspruch 1, wobei der optische Sensor einen nach vorne gerichteten optischen Sensor (104) umfasst und wobei das Sichtfeld auf eine Bewegungsrichtung des Fahrzeugs gerichtet ist.

3. Verfahren nach Anspruch 1 oder 2, wobei die Bewegung des mindestens einen Objekts eine Geste umfasst, die von einem Körperteil eines Menschen (106) ausgeführt wird.

4. Verfahren nach einem der Ansprüche 1 bis 3, wobei das Fahrzeug ein Flugzeug umfasst und wobei der Fahrzeugbefehl einen Rollbefehl umfasst, der das Flugzeug veranlasst, einen Rollvorgang durchzuführen.

5. Verfahren nach einem der Ansprüche 1-4, wobei das mindestens eine Objekt eine Ausrüstung (120, 121, 122) umfasst, die von einem Menschen (106) gehalten wird, und wobei die Ausrüstung optional ein leuchtendes Beleuchtungselement (122) umfasst, das von dem Menschen (106) gehalten wird.

6. Verfahren nach einem der Ansprüche 1 bis 5, wobei das Bestimmen des Fahrzeugbefehls ferner das Abgleichen (308) des Musters mit einem entsprechenden Befehl aus einem gespeicherten Befehlsbestand (254) umfasst.

7. Verfahren nach einem der Ansprüche 1 bis 6, ferner umfassend das Bestimmen (310) durch die Prozessorschaltung, ob die Bewegung des mindestens einen Objekts mit einer Berechtigung zur Bereitstellung des Fahrzeugbefehls verknüpft ist.

8. Verfahren nach Anspruch 7, wobei das Bestimmen, ob die Bewegung des mindestens ein Objekt mit der Autorisierung verknüpft ist, ferner das Bestimmen (312) umfasst, ob ein Mensch, der mit der Bewegung des Objekts assoziiert ist, autorisiert ist, den Fahrzeugbefehl bereitzustellen, und wobei das Verfahren optional ferner umfasst:
Identifizieren (314) eines von dem Menschen getragenen einheitlichen Elements (120), das die Berechtigung zum Erteilen des Fahrzeugbefehls anzeigt, durch die Prozessorschaltung, wobei die Bestimmung, ob der Mensch autorisiert ist, zumindest teilweise auf dem einheitlichen Element basiert;
und/oder
Identifizieren (314), durch die Prozessorschaltung, eines von dem Menschen gehaltenen Referenzpunktes (122), der die Berechtigung anzeigt den Fahrzeugbefehl zu geben, wobei die Bestimmung, ob der Mensch berechtigt ist, zumindest teilweise auf dem Referenzpunkt basiert.

9. Verfahren nach Anspruch 7 oder 8, wobei die Bestimmung, ob die Bewegung des mindestens einen Objekts mit der Autorisierung verknüpft ist, zumindest teilweise auf dem Signal basiert, das von dem mit dem mindestens einen Objekt verknüpften Sender empfangen wird.

10. Verfahren nach einem der Ansprüche 1 bis 9, das ferner umfasst, dass die Prozessorschaltung eine Komponente (130, 132) des Fahrzeugs veranlasst (322), den Fahrzeugbefehl auszuführen.

11. Das Verfahren nach einem der vorhergehenden Ansprüche umfasst ferner:
selektives Beleuchten eines Beleuchtungselements (130) des Fahrzeugs, um einen visuellen Hinweis von mindestens einer Erfassung des Objekts, Erfassung der Bewegung, einer Bestimmung des Fahrzeugbefehls oder einer Ausführung des Fahrzeugbefehls zu liefern; und/oder selektives Bewegen eines beweglichen Elements (132) des Fahrzeugs, um einen visuellen Hinweis von mindestens einer Erfassung des Objekts, einer Erfassung der Bewegung, einer Bestimmung des Fahrzeugbefehls oder einer Ausführung des Fahrzeugbefehls zu liefern.

12. Computerlesbares Speichermedium (116) zur Verbesserung der Betriebseffizienz eines Fahrzeugs, das ausführbare Anweisungen (134) umfasst, die als Reaktion auf die Ausführung ein System (100), das eine Prozessorschaltung umfasst, zur Durchführung von Operationen veranlasst:
Empfangen von Sensordaten von mindestens einem optischen Sensor (104) eines Fahrzeugs (102);
auf der Grundlage einer Analyse der Sensordaten, Bestimmen (302) einer Bewegung eines Objekts (106) in einem Sichtfeld des mindestens einen optischen Sensors;
auf der Grundlage der Bewegung des Objekts, Identifizieren (304) eines Musters (304);
auf der Grundlage des Musters das Bestimmen (306) eines Fahrzeugbefehls, der vom Fahrzeug auszuführen ist;
Empfangen (316) eines Signals von einem Sender (110) über einen Empfänger oder Transceiver (110), der mit dem Objekt verknüpft ist, wobei das Signal mit dem Fahrzeugbefehl verknüpft ist, wobei das Signal von einem Stab (122) empfangen wird, der von einem Menschen (106) gehalten wird; und
Überprüfen (317) des Fahrzeugbefehls zumindest teilweise auf der Grundlage des Signals.

13. Computerlesbares Speichermedium nach Anspruch 12, wobei die Bewegung des Objekts eine Geste eines Menschen (106) umfasst, wobei das Bestimmen der Bewegung des Objekts ferner das Identifizieren der Geste umfasst, und wobei die Vorgänge ferner das Bestimmen (318) umfassen, ob der Mensch autorisiert ist, den Fahrzeugbefehl zu geben.

14. Ein System (100) zur Verbesserung der Betriebseffizienz eines Fahrzeugs (102), das Folgendes umfasst:
eine Prozessorschaltung (114); und
einen Speicher (116), der maschinenlesbare Anweisungen (134) enthält, die, wenn sie von der Prozessorschaltung ausgeführt werden, die Prozessorschaltung veranlassen, Operationen (300) durchzuführen, die umfassen:
Identifizierung (304) mindestens einer Geste, die von einem Menschen ausgeführt wird, durch die Prozessorschaltung (106) auf der Grundlage der Bewegung eines Objekts;
Bestimmen (306) eines von dem Fahrzeug auszuführenden Fahrzeugbefehls durch die Prozessorschaltung auf der Grundlage der mindestens einen Geste;
Empfangen (316) eines Signals von einem Sender, der mit dem Objekt verknüpft ist, durch die Prozessorschaltung (114) über einen Empfänger oder Transceiver (110), wobei das Signal mit dem Fahrzeugbefehl verknüpft ist, wobei das Signal von einem Stab (122) empfangen wird, der von einem Menschen (106) gehalten wird;
Überprüfen (317) des Fahrzeugbefehls zumindest teilweise auf der Grundlage des Signals;
Bestimmen (318), durch die Prozessorschaltung, ob der Mensch berechtigt ist, den Fahrzeugbefehl zu geben; und als Reaktion auf die Feststellung, dass der Mensch autorisiert ist, die Ausführung (322) des Fahrzeugbefehls.

15. Das System nach Anspruch 14 umfasst ferner:
ein Fahrzeug (102) umfassend der Prozessorschaltung und dem Speicher, wobei das Fahrzeug ferner umfasst:
einen nach vorne gerichteten optischen Sensor (104), der so konfiguriert ist, dass er die Armbewegung des Menschen in einem Sichtfeld des nach vorne gerichteten optischen Sensors erfasst, wobei sich der Mensch außerhalb des Fahrzeugs befindet.

## Revendications

1. Procédé (300) d'amélioration de l'efficacité opérationnelle d'un véhicule (102), le procédé comprenant :
la détection (302), par un capteur optique (104), d'un mouvement d'au moins un objet (106) dans un champ de vision du capteur optique ;
l'identification (304) d'un modèle, par un circuit de processeur (114), en se basant sur le mouvement de l'au moins un objet ;
la détermination (306), par le circuit du processeur, en se basant sur le modèle, d'une commande de véhicule devant être effectuée par le véhicule ;
la réception (316), par un récepteur ou un émetteur (110), d'un signal provenant d'un émetteur associé à l'au moins un objet, procédé dans lequel le signal est associé à la commande du véhicule, procédé dans lequel le signal est reçu en provenance d'un bâton (122) tenu par un humain (106) ; et
la vérification (317), par le circuit (114) du processeur, de la commande du véhicule, en se basant au moins partiellement sur le signal.

2. Procédé selon la revendication 1, dans lequel le capteur optique comprend un capteur optique (104) orienté vers l'avant, et procédé dans lequel le champ de vision est tourné vers une direction du mouvement du véhicule.

3. Procédé selon la revendication 1 ou 2, dans lequel le mouvement de l'au moins un objet comprend un geste effectué par une partie corporelle d'un humain (106).

4. Procédé selon l'une quelconque des revendications 1 à 3, dans lequel le véhicule comprend un avion, et procédé dans lequel la commande du véhicule comprend une commande de roulage au sol qui amène l'avion à effectuer une opération de roulage au sol.

5. Procédé selon l'une quelconque des revendications 1 à 4, dans lequel l'au moins un objet comprend un équipement (120, 121, 122) qui est tenu par un humain (106) et, éventuellement, procédé dans lequel l'équipement comprend un élément d'éclairage allumé (122) qui est tenu par l'humain (106).

6. Procédé selon l'une quelconque des revendications 1 à 5, dans lequel la détermination de la commande du véhicule comprend en outre le fait d'établir la corrélation (308) entre le modèle et une commande importante parmi un inventaire de commandes (254), qui a été stocké.

7. Procédé selon l'une quelconque des revendications 1 à 6, comprenant en outre le fait de déterminer (310), par le circuit du processeur, si le mouvement de l'au moins un objet est associé à une autorisation de fournir la commande du véhicule.

8. Procédé selon la revendication 7, dans lequel la détermination du fait de savoir, si le mouvement de l'au moins un objet est associé à l'autorisation, comprend en outre le fait de déterminer (312) si un humain, associé au mouvement de l'objet, est autorisé à fournir la commande du véhicule et, éventuellement, où le procédé comprend en outre :
l'identification (314), par le circuit du processeur, d'un élément d'uniforme (120) qui est porté par l'humain et qui indique l'autorisation à fournir la commande du véhicule, procédé dans lequel le fait de déterminer, si l'humain est autorisé, est au moins partiellement basé sur l'élément d'uniforme ; et/ou
l'identification (314), par le circuit du processeur, d'un repère (122) qui est tenu par l'humain et qui indique l'autorisation à fournir la commande du véhicule, procédé dans lequel le fait de déterminer, si l'humain est autorisé, est au moins partiellement basé sur le repère.

9. Procédé selon la revendication 7 ou 8, dans lequel le fait de déterminer, si le mouvement de l'au moins un objet est associé à l'autorisation, est au moins partiellement basé sur le signal reçu en provenance de l'émetteur associé à l'au moins un objet.

10. Procédé selon l'une quelconque des revendications 1 à 9, comprenant en outre le fait d'amener (322), par le circuit du processeur, un composant (130, 132) du véhicule à exécuter la commande du véhicule.

11. Procédé selon l'une quelconque des revendications précédentes, comprenant en outre :
le fait d'allumer sélectivement un élément d'éclairage (130) du véhicule, afin de fournir une indication visuelle d'au moins l'une des opérations parmi celles concernant une détection de l'objet, une détection du mouvement, une détermination de la commande du véhicule ou une exécution de la commande du véhicule ; et/ou
le fait de déplacer sélectivement un élément mobile (132) du véhicule, afin de fournir une indication visuelle d'au moins l'une des opérations parmi celles concernant une détection de l'objet, une détection du mouvement, une détermination de la commande du véhicule ou une exécution de la commande du véhicule.

12. Support de stockage lisible par ordinateur (116), support de stockage qui sert à améliorer l'efficacité opérationnelle d'un véhicule et qui comprend des instructions exécutables (134) qui, en réponse à leur exécution, amènent un système (100), qui comprend un circuit de processeur, à mettre en œuvre des opérations comprenant :
la réception de données de capteur provenant d'au moins un capteur optique (104) d'un véhicule (102) ;
en se basant sur une analyse de données du capteur, lesdites opérations comprennent la détermination (302) d'un mouvement d'un objet (106) dans un champ de vision de l'au moins un capteur optique ;
en se basant sur le mouvement de l'objet, lesdites opérations comprennent l'identification (304) d'un modèle ;
en se basant sur le modèle, lesdites opérations comprennent la détermination (306) d'une commande de véhicule devant être exécutée par le véhicule ;
la réception (316), via un récepteur ou un émetteur (110), d'un signal provenant d'un émetteur associé à l'objet, support de stockage dans lequel le signal est associé à la commande du véhicule, support de stockage dans lequel le signal est reçu en provenance d'un bâton (122) tenu par un humain (106) ; et
la vérification (317) de la commande du véhicule, en se basant au moins partiellement sur le signal.

13. Support de stockage lisible par ordinateur selon la revendication 12, dans lequel le mouvement de l'objet comprend un geste effectué par un humain (106), support de stockage dans lequel la détermination du mouvement de l'objet comprend en outre l'identification du geste, et support de stockage dans lequel les opérations comprennent en outre le fait de déterminer (318) si l'humain est autorisé à fournir la commande du véhicule.

14. Système (100) servant à améliorer l'efficacité opérationnelle d'un véhicule (102), ledit système comprenant :
un circuit de processeur (114) ; et
une mémoire (116) comprenant des instructions (134) lisibles par ordinateur, instructions qui, lorsqu'elles sont exécutées par le circuit du processeur, amènent le circuit du processeur à mettre en œuvre des opérations (300) comprenant :
l'identification (304), par le circuit du processeur, d'au moins un geste effectué par un humain (106), en se basant sur le mouvement d'un objet ;
la détermination (306), par le circuit du processeur, d'une commande du véhicule devant être exécutée par le véhicule, en se basant sur l'au moins un geste ;
la réception (316), par le circuit (114) du processeur via un récepteur ou un émetteur (110), d'un signal provenant d'un émetteur associé à l'objet, système dans lequel le signal est associé à la commande du véhicule, système dans lequel le signal est reçu en provenance d'un bâton (122) tenu par un humain (106) ;
la vérification (317) de la commande du véhicule, en se basant au moins partiellement sur le signal ;
la détermination (318), par le circuit du processeur, du fait de savoir si l'humain est autorisé à fournir la commande du véhicule ; et
en réponse à la détermination du fait de savoir si l'humain est autorisé, lesdites opérations comprennent l'exécution (322) de la commande du véhicule.

15. Système selon la revendication 14, comprenant en outre :
un véhicule (102) comprenant le circuit du processeur et la mémoire, le véhicule comprenant en outre :
un capteur optique (104) orienté vers l'avant et configuré pour détecter le mouvement d'un bras de l'humain dans un champ de vision du capteur optique orienté vers l'avant, système dans lequel l'humain est à l'extérieur du véhicule.
